# EUROPÄISCHE PATENTSCHRIFT

(11) **EP 1 615 777 B1**
(45) Veröffentlichungstag und Bekanntmachung des Hinweises auf die Patenterteilung: **20.02.2008**
(21) Anmeldenummer: 04725917.1
(22) Anmeldetag: 06.04.2004
(51) Int. Cl.: B42D 15/00

(54) **SICHERHEITSLABEL UND HERSTELLUNGSVERFAHREN FÜR DASSELBE**
SECURITY LABEL AND METHOD FOR THE PRODUCTION THEREOF
ETIQUETTE DE SECURITE ET PROCEDE DE FABRICATION ASSOCIE

(30) Priorität: 10.04.2003 DE 10316771
(43) Veröffentlichungstag der Anmeldung: 18.01.2006
(73) Patentinhaber: Giesecke & Devrient GmbH, 81677 München (DE)
(72) Erfinder: BAUER, Michael, 82216 Gernlinden (DE); REINER, Harald, 81371 München (DE)
(74) Vertreter: Höhfeld, Jochen
(86) Internationale Anmeldenummer: PCT/EP2004/003674
(87) Internationale Veröffentlichungsnummer: WO 2004/090841

(56) Entgegenhaltungen:
- EP-A- 1 073 993
- EP-A- 1 134 694
- EP-A- 1 148 440
- EP-A- 1 179 811
- WO-A-02/02350
- GB-A- 1 127 043
- GB-A- 2 128 581

## Beschreibung

Die Erfindung betrifft ein selbstklebendes Sicherheitslabel für einen Datenträger, wie ein Sicherheits- oder Wertdokument, mit einem Substrat, auf dessen Vorderseite Sicherheitsmerkmale aufgebracht sind und dessen Rückseite mit einer Kaltklebefolie versehen ist. Die Erfindung betrifft ferner einen Datenträger mit einem derartigen Sicherheitslabel und ein Verfahren zur Herstellung eines solchen Sicherheitslabels.

Datenträger im Sinne der vorliegenden Erfindung sind insbesondere Sicherheits- oder Wertdokumente, wie Banknoten, Pässe, Ausweisdokumente, Visa-Sticker, Scheckformulare, Aktien, Urkunden und dergleichen.

Bei derartigen Dokumenten werden oft aufwändige Maßnahmen ergriffen, um die Dokumente von Nachahmungen oder Fälschungen unterscheidbar zu machen. Sie werden dazu mit Sicherheitselementen versehen, die zum einen schwierig nachzuahmen sind und andererseits auch für einen Laien eine Überprüfung der Echtheit des Sicherheitselements ermöglichen. Beispielsweise zeichnen sich durch Stichtiefdruck erzeugte Druckbereiche durch eine auch für den Laien leicht erkennbare charakteristische Taktilität aus, die sich durch andere Druckverfahren, und insbesondere durch Kopiergeräte oder Scanner, nicht reproduzieren lässt.

Die Sicherheitselemente sind oft in Form von selbstklebenden Sicherheitslabeln ausgebildet, die von einer autorisierten Stelle, beispielsweise einer Passbehörde, auf das Sicherheits- oder Wertdokument geklebt werden. Die Sicherheitslabel können auch in Form von Etiketten oder Siegeln ausgebildet sein, die etwa der Sicherung hochwertiger Produkte oder deren Verpackungen dienen.

Aus der Druckschrift DE 27 48 498 A1 ist ein mehrschichtiges Etikett zum Bezeichnen von Gegenständen bekannt, das bei einem Ablöseversuch zerstört oder so weit verunstaltet wird, dass seine Übertragung auf einen anderen Gegenstand feststellbar ist. Das Etikett weist eine biegsame durchsichtige Kunststofffolie auf, die auf einer Seite einen eine Information enthaltenden Aufdruck enthält. Auf der bedruckten Seite ist die Folie mit einer druckempfindlichen Klebstoffschicht zum Aufbringen auf einen Gegenstand versehen. Dabei weist der Aufdruck der Folie gegenüber eine geringere Haftfähigkeit auf als gegenüber der Klebstoffschicht, so dass bei einem Ablöseversuch wenigstens ein Teil der an der Unterlage haftenden Klebstoffschicht zurückbleibt, und wobei auf dieser wenigstens ein Teil des Aufdrucks haftet.

Die Druckschrift GB 2 128 581 A offenbart einen transparenten Film mit auf einer Seite aufgedruckten lichtdurchlässigen Markierungen. Auf derselben Seite des Films ist ein druckempfindlicher Klebstoff aufgebracht, um den Film über eine zu schützende Information, beispielsweise ein Passfoto, in einem Pass kleben zu können. Der verwendete Klebstoff wird dabei so gewählt, dass der Versuch, den Film zu entfernen, zu einer irreparablen Beschädigung der Unterlage oder des Films führt.

Die Druckschrift WO-A-02/02350 offenbart ein Sicherkeitspapier mit einem Schaltkreis.

Ausgehend davon liegt der Erfindung die Aufgabe zugrunde, ein gegenüber dem Stand der Technik verbessertes Sicherheitslabel zu schaffen. Insbesondere soll das Sicherheitslabel einen Einsatz bei besonders sicherheitsrelevanten Produkten beispielsweise als Biometrielabel oder Visa-Sticker erlauben.

Diese Aufgabe wird durch das Sicherheitslabel mit den Merkmalen des Hauptanspruchs gelöst. Ein Datenträger mit einem derartigen Sicherheitslabel und ein Herstellungsverfahren für ein solches Sicherheitslabel sind Gegenstand der nebengeordneten Ansprüche 9 und 11. Weiterbildungen der Erfindung sind Gegenstand der Unteransprüche.

Gemäß der Erfindung enthält ein Sicherheitslabel der eingangs genannten Art einen in einer Aussparung der Klebefolie angeordneten integrierten Schaltkreis zur Speicherung von Sicherheitsdaten und eine zwischen Substrat und Klebefolie angeordnete und mit dem integrierten Schaltkreis verbundene Antenne zur kontaktlosen Kommunikation mit dem integrierten Schaltkreis. Die Funktionalität des selbstklebenden Sicherheitslabels wird dadurch um eine elektronische Speicherfunktion, beispielsweise zur Speicherung biometrischer Daten, erweitert.

Dabei erlaubt die erfindungsgemäße Gestaltung die intensive Bearbeitung des Sicherheitslabels beim Produktionsprozess, ohne den erforderlichen integrierten Schaltkreis zu stark zu belasten, da dieser erst am Ende des Produktionsprozesses über die Aussparung der Klebefolie mit der Antenne verbunden werden kann.

Zugleich bietet das Sicherheitslabel der Erfindung den Vorteil, dass ein Ablöseversuch des auf einen Untergrund aufgeklebten Sicherheitslabels mit hoher Wahrscheinlichkeit entweder die Antenne selbst zerstört oder den mit der Antenne verbundenen Schaltkreis von der Antenne löst, so dass die Kommunikationseinheit nicht mehr funktionsfähig ist. Im Gegensatz dazu sind herkömmliche, mit einem Transponder ausgestattete Label, die eine kontaktlose Kommunikation mit einem Chip ermöglichen, so stabil aufgebaut, dass ein zerstörungsloses Ablösen des Transponders von dem Label möglich ist.

Die Aussparung kann in einfachsten Fall kreisförmig, aber auch oval, rechteckig, sternförmig oder mit jeder beliebigen Form ausgebildet werden, die ausreichend Raum für das spätere Einbringen des integrierten Schaltkreises zur Verfügung stellt.

Die Aussparung mit dem integrierten Schaltkreis ist bevorzugt durch ein Abdeckelement, insbesondere ein selbstklebendes Abdeckelement, verschlossen. Es versteht sich, dass die Form des Abdeckelements zweckmäßig der Form der Aussparung angepasst wird, um einen vollständigen Verschluss durch eine überlappende Anordnung von Kaltklebefolie und Abdekkelement zu erzielen.

Nach einer zweckmäßigen Weiterbildung der Erfindung ist die Antenne auf das Substrat aufgedruckt oder aufgeprägt.

Die vorderseitigen Sicherheitsmerkmale weisen vorteilhaft ein Passbild, ein fein strukturiertes Muster, insbesondere einen Guilloche-Druck, maschinenlesbare Merkmale, wie eine maschinenlesbare Zeile, Fluoreszenzstoffe, magnetische oder elektrisch leitfähige Stoffe, oder einen mehrdimensionalen Barcode auf. Derartige Sicherheitsmerkmale sind an sich bekannt und werden daher im Folgenden nicht näher erläutert.

In einer besonders bevorzugten Ausgestaltung enthalten die vorderseitigen Sicherheitsmerkmale des Sicherheitslabels einen im Stichtiefdruckverfahren erzeugten Druckbereich. In diesem Druckbereich ist die Substratoberfläche durch das Einpressen in die Druckplatte partiell verformt und mit einer relativ dicken Farbschicht versehen. Ein solcher Druckbereich ist aufgrund seiner Taktilität auch für den Laien leicht erkennbar und kann somit als Echtheitsmerkmal genutzt werden. Während bei herkömmlichen Gestaltungen von Sicherheitslabeln die hohen Drücke, die beim Stichtiefdruck auftreten, einen eingebondeten Chip unweigerlich beschädigen, wird der integrierte Schaltkreis beim erfindungsgemäßen Sicherheitsetikett erst nach dem Stichtiefdruckschritt eingebracht und mit der Antenne verbunden.

Mit dem Stichtiefdruck wird vorzugsweise ein Druckrelief im Substrat erzeugt, das eine Reliefhöhe von 25 µm bis 80 µm aufweist. Dabei ist zu beachten, dass die im Druckergebnis erreichte Reliefhöhe sowohl von der Gravurtiefe der Druckplatte, als auch von den Eigenschaften des Substratmaterials und der Druckfarbe abhängt. Auch wird die Reliefhöhe je nach der individuellen Sensibilität eines Benutzers unterschiedlich wahrgenommen. Allgemein führt jedoch ein Druckrelief mit einer Reliefamplitude von 50 µm oder mehr zu taktil deutlich fühlbaren Reliefstrukturen.

Gemäß einer vorteilhaften Weiterbildung sind die vorderseitigen Sicherheitsmerkmale zumindest teilweise mit einer Folie abgedeckt, um mechanischen und/ oder chemischen Belastungen oder Abnutzungserscheinungen der Sicherheitsmerkmale entgegenzuwirken. Insbesondere wenn die vorderseitigen Sicherheitsmerkmale einen im Stichtiefdruck erzeugten Druckbereich enthalten, kann es zweckmäßig sein, nur einen Teil des Stichtiefdruck-Bereichs mit der Folie abzudecken, und den anderen Teil für eine einfache und direkte taktile Echtheitsprüfung durch den Benutzer zur Verfügung zu stellen.

Die genannte Folie weist mit Vorteil eine Dicke von weniger als 20 µm, insbesondere von etwa 6 µm bis etwa 12 µm auf. Darüber hinaus kann die Folie zur weiteren Erhöhung der Sicherheit des Labels holographische Beugungsstrukturen enthalten. Als eingesetzte Folienmaterialien kommen beispielsweise Polyethylenterephthalat oder verschiedene Thermoplaste infrage. Um die darunter liegende Information nicht zu verdecken, ist die Folie vorzugsweise transparent oder zumindest transluzent. Für manche Anwendungen kann es auch vorteilhaft sein, wenn die Folie eingefärbt ist.

Das Substrat des Sicherheitslabels ist vorzugsweise aus Baumwollpapier oder aus Papier mit einer Baumwoll-/Kunstfasermischung gebildet. Das Substrat kann alternativ auch aus einem Polymersubstrat gebildet sein.

Die Erfindung enthält auch einen Datenträger, insbesondere ein Wertdokument, wie eine Banknote, einen Pass, ein Ausweisdokument, einen Visa-Sticker oder dergleichen, mit einem oben beschriebenen Sicherheitslabel. Das erfindungsgemäße Sicherheitslabel kann auch auf ein hochwertiges Produkt oder eine Produktverpackung aufgebracht sein.

Die Haftstärken der Kaltklebefolie und der Verbindung zwischen dem integrierten Schaltkreis und der Antenne sind dabei bevorzugt so aufeinander abgestimmt, dass ein Ablösen des Sicherheitslabels von dem Datenträger zu einer Zerstörung der Antenne oder einer Trennung von Antenne und integriertem Schaltkreis führt.

Ein Verfahren zur Herstellung eines selbstklebenden Sicherheitslabels für einen Datenträger umfasst die Verfahrensschritte:
a) Bereitstellen eines Substrats,
b) Aufbringen von Sicherheitsmerkmalen auf eine Vorderseite des Substrats,
c) Aufbringen einer Antennenanordnung auf eine Rückseite des Substrats,
d) Aufbringen einer Kaltklebefolie mit einer Aussparung im Bereich der Antennenanordnung auf die mit der Antennenanordnung versehene Substratrückseite, und
e) Einbringen eines integrierten Schaltkreises in die Aussparung und Verbinden des integrierten Schaltkreises mit der Antennenanordnung.

Die Antennenanordnung wird dabei vorteilhaft durch einen Inkjet- oder Siebdruck leitfähiger Farben oder durch Heißprägen einer leitfähigen Folie auf die Substratrückseite aufgebracht. Die Antennenanordnung kann auch als metallisierte Folie, die mit hitzeaktivierbarem Kleber beschichtet ist, vollständig mittels Transferverfahren auf das Substat aufgebracht werden.

Zum Schutz des integrierten Schaltkreises wird die Aussparung der Klebefolie nach dem Einbringen des Schaltkreises vorteilhaft mit einem selbstklebenden Abdeckelement verschlossen.

Gemäß einer zweckmäßigen Verfahrensvariante wird das Substrat beim Aufbringen von Sicherheitsmerkmalen von Rolle mit einem Untergrunddruck im Offsetdruckverfahren versehen. Auch das Aufbringen der Antennenanordnung und der Kaltklebefolie auf die Rückseite des Substrats erfolgt bevorzugt von Rolle.

In einer besonders bevorzugten Weiterbildung der Erfindung wird bei dem Aufbringen von Sicherheitsmerkmalen ein Druckbereich im Stichtiefdruckverfahren erzeugt. Dieser Schritt wird vorteilhaft erst nach dem Aufbringen der Antennenanordnung und der Kaltklebefolie und vor dem Einbringen des integrierten Schaltkreises im Bogenformat durchgeführt. Druckbelastungen des integrierten Schaltkreises beim Stichtiefdruck werden so vermieden.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig.1: eine Aufsicht auf einen Visa-Sticker nach einem Ausführungsbeispiel der Erfindung in schematischer Darstellung,
- Fig. 2: die Rückseite des Visa-Stickers von Fig.1 mit bereits gebondetem integrierten Schaltkreis, aber noch unverschlossener Aussparung in der Klebefolie, und
- Fig. 3 bis 6: vier Zwischenschritte eines erfindungsgemäßen Verfahrens zur Herstellung eines Visa-Stickers, jeweils anhand eines Querschnitts durch einen Visa-Sticker wie in Fig. 2 gezeigt.

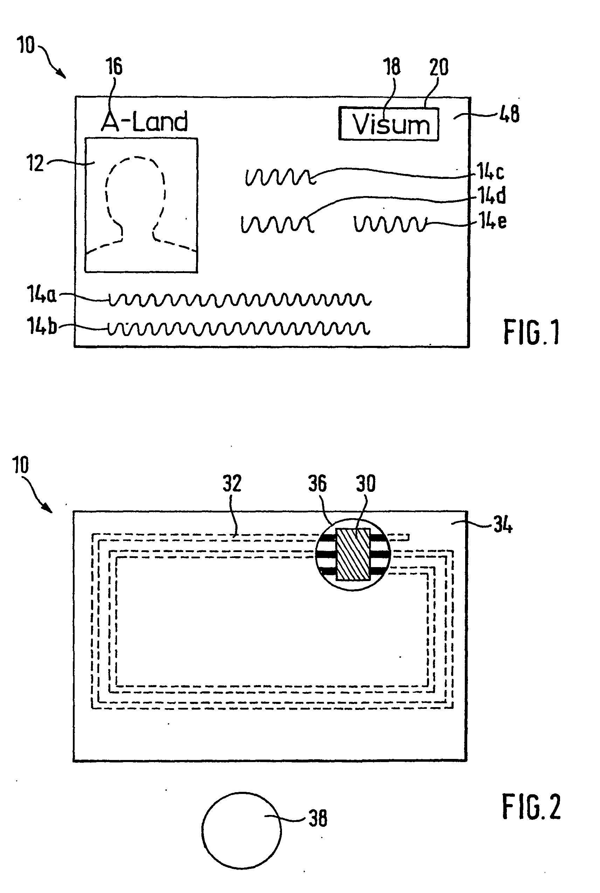

Figuren 1 und 2 zeigen eine schematische Darstellung eines Visa-Stickers 10 nach einem Ausführungsbeispiel der Erfindung. Die Vorderseite des Visa-Stickers 10 enthält ein Passbild 12 des Inhabers sowie in maschinenlesbarer Form weitere personalisierte Angaben 14a bis 14e, die unter anderem den Namen 14a des Inhabers, eine Identifikationsnummer 14b, den Ausstellungsort 14c und den Gültigkeitszeitraum des Visums 14d,14e enthalten.

Zur Erzeugung von taktil fühlbaren Druckmustern ist in bestimmten Bereichen 16,18 des Visa-Stickers 10 über den Untergrunddruck 42 mit Stahlstich gedruckt. Im Ausführungsbeispiel sind das Ausstellungsland 16 und der Schriftzug "VISUM" 18 im Stichtiefdruck ausgeführt. In anderen Varianten kann beispielsweise auch das Passbild 12 mit einem Muster im Stichtiefdruck versehen sein.

Die Vorderseite des Visa-Stickers 10 ist weiter zum Schutz der Personendaten mit einer etwa 10 µm dicken Folie 48 laminiert, die über dem Bereich des Schriftzugs 18 eine Öffnung 20 aufweist. Dadurch ist der Schriftzug "VISUM" mit den Fingerspitzen leicht zu erfühlen. Zusätzlich sind in die Folie 48 als weitere Sicherheitsmerkmale in der Figur nicht dargestellte Beugungsstrukturen eingeprägt.

Mit Bezug auf Fig. 2 trägt die Rückseite des Visa-Stickers 10 einen Transponder mit einem integrierten Schaltkreis 30, der beispielsweise biometrische Daten des Inhabers speichert. Zur kontaktlosen Kommunikation mit dem Schaltkreis 30 ist auf die Substratrückseite eine Antenne 32 aus einem leitfähigen Folienmaterial aufgebracht.

Die Substratrückseite und die Antenne 32 sind weiter mit einer Kaltklebefolie 34 bedeckt, mit der der Visa-Sticker 10 in ein Passbuch geklebt werden kann. In einem Kontaktbereich der Antenne 32, an dem die Antenne 32 und der Schaltkreis 30 miteinander verbunden sind, weist die Kaltklebefolie 34 eine Aussparung 36 auf, in die der Schaltkreis 30 am Ende des Produktionsprozesses eingebracht und an die Antenne 32 kontaktiert wird.

Nach dem Kontaktieren des Schaltkreises 30 wird die Aussparung 36 mit einem Abdeckelement 38 aus Kaltklebefolie verschlossen. Der integrierte Schaltkreis 30 wird somit erst nach dem Stichtiefdruckschritt eingebracht, in welchem der Visa-Sticker 10 besonders hohen Drücken ausgesetzt ist.

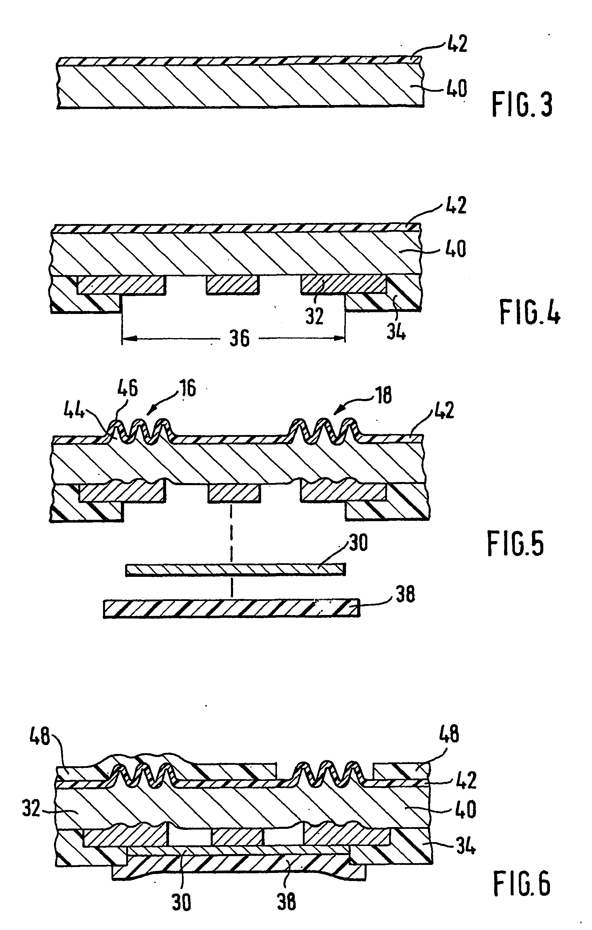

Die Herstellung des Visa-Stickers 10 der Fig. 1 und 2 wird nachfolgend anhand der Prozesszwischenschritte der Fig. 3 bis 6 näher erläutert. Die Figuren zeigen jeweils einen Querschnitt durch einen beschriebenen Visa-Sticker 10.

Zunächst wird ein Substrat 40, im Ausführungsbeispiel ein Papiersubstrat, bereitgestellt. Das Papiersubstrat 40 wird in Rolle mit einem Untergrunddruck 42 versehen, der verschiedene Sicherheitsmerkmale, beispielsweise ein Passfoto 12, einen Guilloche-Druck, maschinenlesbare Zeilen 14a-14e oder dergleichen, enthalten kann. Diese Situation ist in der Fig. 3 dargestellt.

Dann wird auf die Rückseite des Papiersubstrats 40 von Rolle eine Antenne 32 aus einem geeigneten leitfähigen Folienmaterial aufgeklebt. In einer Abwandlung des Verfahrens erfolgt das Aufbringen der Antenne 32 durch einen Siebdruck oder Inkjet-Druck mit leitfähigen Farben.

Anschließend wird ebenfalls von Rolle eine Klebefolie 34 mit einem nicht dargestellten Abdeckpapier aufgebracht. Die Klebefolie 34 weist an der Stelle, an der nachfolgend der integrierte Schaltkreis 30 kontaktiert wird, eine Aussparung 36 passender Größe auf, wie in Fig. 4 gezeigt

Nunmehr werden die auf Rolle vorbereiteten Visa-Sticker 10 in Bogen geschnitten und im Bogenformat weiterverarbeitet. Auf den Untergrunddruck 42 wird nun in den gewünschten Bereichen 16 und 18 der Stahlstich gedruckt. In diesen Bereichen weist der Visa-Sticker dann taktil fühlbare Reliefstrukturen mit einer starken Prägung 44 und vergleichsweise dickem Farbauftrag 46 auf, wie in Fig. 5 dargestellt. Nach dem Stichtiefdruck wird der integrierte Schaltkreis 30 in die Aussparung 36 eingebracht und an Kontaktpunkten an die Antenne 32 gebondet. Anschließend erfolgt eine Funktionsprüfung des durch die Antenne 32 und den integrierten Schaltkreis 30 gebildeten Transponders.

Dann wird die Aussparung 36 mit einem passend geformten, im Ausführungsbeispiel runden, Abdeckelement 38 aus Kaltklebefolie verschlossen.

In einem weiteren Schritt wird die Vorderseite des Visa-Stickers 10 mit einer Beugungsstrukturen enthaltenden Folie 48 laminiert. Da die Folie 48 die taktile Erfassbarkeit der Stahlstichbereiche reduziert, weist sie im Bereich 18 eine Öffnung 20 auf, durch die das Druckrelief des Stahlstichs unverändert fühlbar ist. Ein solcher fertig gestellter Visa-Sticker 10 ist in der Fig. 6 im Querschnitt dargestellt.

## Patentansprüche

1. Selbstklebendes Sicherheitslabel für einen Datenträger, wie ein Sicherheits- oder Wertdokument, mit einem Substrat (40), auf dessen Vorderseite Sicherheitsmerkmale (12-18, 42) aufgebracht sind und dessen Rückseite mit einer Kaltklebefolie (34) versehen ist, **dadurch gekennzeichnet, dass** das Si-cherheitslabel einen in einer Aussparung (36) der Kaltklebefolie (34) angeordneten integrierten Schaltkreis (30) zur Speicherung von Sicherheitsdaten und eine zwischen Substrat (40) und Kaltklebefolie (34) angeordnete und mit dem integrierten Schaltkreis (30) verbundene Antenne (32) zur kontaktlosen Kommunikation mit dem integrierten Schaltkreis (30) enthält.

2. Sicherheitslabel nach Anspruch 1, **dadurch gekennzeichnet, dass** die Aussparung (36) mit dem integrierten Schaltkreis (30) durch ein Abdeckelement (38), insbesondere ein selbstklebendes Abdeckelement (38) verschlossen ist.

3. Sicherheitslabel nach Anspruch 1 oder 2, **dadurch gekennzeichnet, dass** die Antenne (32) auf das Substrat (40) aufgedruckt, aufgeklebt oder aufgeprägt ist.

4. Sicherheitslabel nach wenigstens einem der Ansprüche 1 bis 3, **dadurch gekennzeichnet, dass** die vorderseitigen Sicherheitsmerkmale ein Passbild (12), ein fein strukturiertes Muster, insbesondere einen Guilloche-Druck, maschinenlesbare Merkmale, wie eine maschinenlesbare Zeile (14a-14e), Fluoreszenzstoffe, magnetische oder elektrisch leitfähige Stoffe, oder einen mehrdimensionalen Barcode aufweisen.

5. Sicherheitslabel nach wenigstens einem der Ansprüche 1 bis 4, **dadurch gekennzeichnet, dass** die vorderseitigen Sicherheitsmerkmale einen im Stichtiefdruckverfahren erzeugten Druckbereich (16, 18) enthalten.

6. Sicherheitslabel nach wenigstens einem der Ansprüche 1 bis 5, **dadurch gekennzeichnet, dass** die vorderseitigen Sicherheitsmerkmale (12-18,42) zumindest teilweise mit einer Folie (48) abgedeckt sind, wobei die Folie (48) bevorzugt eine Dicke von weniger als 20 µm, besonders bevorzugt von etwa 6 µm bis etwa 12 µm, aufweist.

7. Sicherheitslabel nach Anspruch 6, **dadurch gekennzeichnet, dass** die Folie (48) holographische Beugungsstrukturen enthält.

8. Sicherheitslabel nach wenigstens einem der Ansprüche 1 bis 7, **dadurch gekennzeichnet, dass** das Substrat (40) aus Baumwollpapier oder aus Papier mit einer Baumwoll-/Kunstfasermischung gebildet ist.

9. Datenträger, insbesondere Wertdokument, wie Banknote, Pass, Ausweisdokument, Visa-Sticker oder dergleichen, mit einem Sicherheitslabel (10) nach wenigstens einem der Ansprüche 1 bis 8.

10. Datenträger nach Anspruch 9, **dadurch gekennzeichnet, dass** die Haftstärken der Kaltklebefolie (34) und der Verbindung zwischen dem integrierten Schaltkreis (30) und der Antenne (32) so aufeinander abgestimmt sind, dass ein Ablösen des Sicherheitslabels (10) von dem Datenträger zu einer Zerstörung der Antenne (32) oder einer Trennung von Antenne (32) und integriertem Schaltkreis (30) führt.

11. Verfahren zur Herstellung eines selbstklebenden Sicherheitslabels für einen Datenträger, mit folgenden Verfahrensschritten:
a) Bereitstellen eines Substrats (40),
b) Aufbringen von Sicherheitsmerkmalen (12-18, 42) auf eine Vorderseite des Substrats;
c) Aufbringen einer Antennenanordnung (32) auf eine Rückseite des Substrats (40),
d) Aufbringen einer Kaltklebefolie (34) mit einer Aussparung (36) im Bereich der Antennenanordnung (32) auf die mit der Antennenanordnung (32) versehene Substratrückseite, und
e) Einbringen eines integrierten Schaltkreises (30) in die Aussparung (36) und Verbinden des integrierten Schaltkreises (30) mit der Antennenanordnung (32).

12. Verfahren nach Anspruch 11, **dadurch gekennzeichnet, dass** die Antennenanordnung (32) durch einen Siebdruck leitfähiger Farben aufgebracht wird.

13. Verfahren nach Anspruch 11, **dadurch gekennzeichnet, dass** die Antennenanordnung (32) durch Heißprägen oder Aufkleben einer leitfähigen Folie auf die Substratrückseite aufgebracht wird.

14. Verfahren nach wenigstens einem der Ansprüche 11 bis 13, **dadurch gekennzeichnet, dass** die Aussparung (36) der Kaltklebefolie (34) nach Schritt e) mit einem selbstklebenden Abdeckelement (38) verschlossen wird.

15. Verfahren nach wenigstens einem der Ansprüche 11 bis 14, **dadurch gekennzeichnet, dass** bei Schritt b)
b1) das Substrat (40) von Rolle mit einem Untergrunddruck im Offsetdruckverfahren versehen wird.

16. Verfahren nach wenigstens einem der Ansprüche 11 bis 15, **dadurch gekennzeichnet, dass** die Schritte c) und d) von Rolle erfolgen.

17. Verfahren nach wenigstens einem der Ansprüche 11 bis 16, **dadurch gekennzeichnet, dass** bei Schritt b)
b2) ein Druckbereich im Stichtiefdruckverfahren auf dem Substrat (40) erzeugt wird.

18. Verfahren nach Anspruch 17, **dadurch gekennzeichnet, dass** der Schritt b2) nach den Schritten c) und d) und vor Schritt e) im Bogenformat durchgeführt wird.

## Claims

1. A self-adhesive security label for a data carrier, such as a security document or document of value, having a substrate (40), to the front of which are applied security features (12-18, 42) and the back of which is provided with a cold adhesive foil (34), **characterized in that** the security label contains an integrated circuit (30) disposed in a recess (36) of the cold adhesive foil (34) for storing security data and an antenna (32) disposed intermediate between substrate (40) and cold adhesive foil (34) and connected with the integrated circuit (30) for a contactless communication with the integrated circuit (30).

2. The security label according to claim 1, **characterized in that** the recess (36) with the integrated circuit (30) is closed by a covering element (38), in particular a self-adhesive covering element (38).

3. The security label according to claim 1 or 2, **characterized in that** the antenna (32) is printed on, bonded to or embossed into the substrate (40).

4. The security label according to at least one of claims 1 to 3, **characterized in that** the front-side security features have a passport photograph (12), a finely structured pattern, in particular a guilloche print, machine readable features, such as a machine readable line (14a-14e), fluorescent substances, magnetic or electrically conductive substances, or a multidimensional bar code.

5. The security label according to at least one of claims 1 to 4, **characterized in that** the front-side security features contain a printed area (16, 18) produced by intaglio printing method.

6. The security label according to at least one of claims 1 to 5, **characterized in that** the front-side security features (12-18, 42) at least partially are covered with a foil (48), the foil (48), the foil (48) preferably having a thickness of less than 20 micron, especially preferred about 6 micron to about 12 micron.

7. The security label according to claim 6, **characterized in that** the foil (48) contains holographic diffraction structures.

8. The security label according to at least one of claims 1 to 7, **characterized in that** the substrate (40) is made of cotton paper or paper with a mixture of cotton/synthetic fiber.

9. A data carrier, in particular document of value, such as bank note, passport, identification document, visa sticker or the like, with a security label (10) according to at least one of claims 1 to 8.

10. The data carrier according to claim 9, **characterized in that** the adherence strengths of the cold adhesive foil (34) and of the bond between the integrated circuit (30) and the antenna (32) are adjusted to each other such that a removal of the security label (10) from the data carrier results in damaging the antenna (32) or separating antenna (32) and integrated circuit (30).

11. A method for producing a self-adhesive security label for a data carrier with the following procedure steps:
a) providing a substrate (40);
b) applying security features (12-18, 42) to a front of the substrate;
c) applying an antenna arrangement (32) to a back of the substrate (40);
d) applying a cold adhesive foil (34) with a recess (36) in the area of the antenna arrangement (32) to the back of the substrate which is provided with the antenna arrangement (32), and
e) incorporating an integrated circuit (30) into the recess (36) and connecting the integrated circuit (30) with the antenna arrangement (32).

12. The method according to claim 11, **characterized in that** the antenna arrangement (32) is applied by screen printing conductive inks.

13. The method according to claim 11, **characterized in that** the antenna arrangement (32) is applied by hot stamping or bonding a conductive foil to the back of the substrate.

14. The method according to at least one of claims 11 to 13, **characterized in that** the recess (36) of the cold adhesive foil (34) after step e) is closed with a self-adhesive covering element (38).

15. The method according to at least one of claims 11 to 14, **characterized in that** in step b)
b1) the reel-fed substrate (40) is provided with a background print by offset printing method.

16. The method according to at least one of claims 11 to 15, **characterized in that** the steps c) and d) are effected in a reel-fed manner.

17. The method according to at least one of claims 11 to 16, **characterized in that** in step b)
b2) a printed area is produced on the substrate (40) by intaglio printing method.

18. The method according to claim 17, **characterized in that** the step b2) is carried out in sheet format after the steps c) and d) and before step e).

## Revendications

1. Une étiquette de sécurité autocollante pour un support de données, tel qu'un document de sécurité ou un document de valeur, comprenant un substrat (40), sur la face avant duquel sont appliquées des caractéristiques de sécurité (12-18, 42) et dont la face arrière est dotée d'un film adhésif à froid (34), **caractérisée en ce que** l'étiquette de sécurité contient un circuit (30) intégré et disposé dans un évidement (36) du film adhésif à froid (34) pour le stockage de données de sécurité et une antenne (32) disposée entre le substrat (40) et le film adhésif à froid (34) et reliée au circuit (30) intégré pour la communication sans contact avec le circuit (30) intégré.

2. Étiquette de sécurité selon la revendication 1, **caractérisée en ce que** l'évidement (36) est fermé avec le circuit (30) intégré par un élément de recouvrement (38), en particulier un élément de recouvrement (38) autocollant.

3. Étiquette de sécurité selon la revendication 1 ou 2, **caractérisée en ce que** l'antenne (32) est imprimée, collée ou incrustée sur le substrat (40).

4. Étiquette de sécurité selon au moins l'une quelconque des revendications 1 à 3, **caractérisée en ce que** les caractéristiques de sécurité sur la face avant présentent une photo d'identité (12), un modèle finement structuré, en particulier une impression à guilloches, des caractéristiques lisibles à la machine, comme une ligne lisible à la machine (14a-14e), des substances fluorescentes, des substances magnétiques ou électroconductrices ou un code-barres à plusieurs dimensions.

5. Étiquette de sécurité selon au moins l'une quelconque des revendications 1 à 4, **caractérisée en ce que** les éléments des caractéristiques de sécurité face avant contiennent une zone d'impression (16, 18) générée dans le procédé d'héliogravure.

6. Étiquette de sécurité selon au moins l'une quelconque des revendications 1 à 5, **caractérisée en ce que** les caractéristiques de sécurité (12-18, 42) sur la face avant sont recouvertes au moins partiellement d'un film (48), le film (48) présentant de préférence une épaisseur d'au moins 20 µm, avec une préférence particulière d'environ 6 µm à environ 12 µm.

7. Étiquette de sécurité selon la revendication 6, **caractérisée en ce que** le film (48) contient des structures de diffraction holographiques.

8. Étiquette de sécurité selon au moins l'une quelconque des revendications 1 à 7. **caractérisée en ce que** le substrat (40) est formé de papier coton ou de papier avec un mélange coton/fibre synthétique.

9. Support de données, en particulier document de valeur, tel que billet de banque, passeport, document d'identité, adhésif pour visa ou similaire, avec une étiquette de sécurité (10) selon au moins l'une quelconque des revendications 1 à 8.

10. Support de données selon la revendication 9, **caractérisé en ce que** les pouvoirs adhérents du film adhésif à froid (34) et de la liaison entre le circuit (30) intégré et l'antenne (32) sont adaptés entre eux de telle sorte qu'un décollement de l'étiquette de sécurité (10) du support de données entraîne une destruction de l'antenne (32) ou une séparation de l'antenne (32) et du circuit (30) intégré.

11. Procédé pour la fabrication d'une étiquette de sécurité autoadhésive pour un support de données, comprenant les étapes suivantes :
a) mise à disposition d'un substrat (40),
b) application de caractéristiques de sécurité (12-18, 42) sur une face avant du substrat,
c) application d'un agencement d'antenne (32) sur une face arrière du substrat (40),
d) application d'un film adhésif à froid (34) avec un évidement (36) dans la zone de l'agencement d'antenne (32) sur la face arrière du substrat dotée de l'agencement d'antenne (32), et
e) introduction d'un circuit (30) intégré dans l'évidement (36) et liaison du circuit (30) intégré avec l'agencement d'antenne (32).

12. Procédé selon la revendication 11, **caractérisé en ce que** l'agencement d'antenne (32) est introduit par une sérigraphie de couleurs conductibles.

13. Procédé selon la revendication 11, **caractérisé en ce que** l'agencement d'antenne (32) est appliqué par estampage à chaud ou collage d'un film conductible sur la face arrière du substrat.

14. Procédé selon au moins l'une quelconque des revendications 11 à 13. **caractérisé en ce que** l'évidement (36) du film adhésif à froid (34) est fermé après l'étape (étape e) avec un élément de recouvrement (38) autocollant.

15. Procédé selon au moins l'une quelconque des revendications 11 à 14, **caractérisé en ce que**, à l'étape b)
b1) le substrat (40) est doté au rouleau d'une impression de fond dans le procédé d'impression offset.

16. Procédé selon au moins l'une quelconque des revendications 11 à 15, **caractérisé en ce que** les étapes c) et d) s'effectuent au rouleau.

17. Procédé selon au moins l'une quelconque des revendications 11 à 16, **caractérisé en ce que**, à l'étape b)
b2) une zone de pression est générée dans le procédé d'héliogravure sur le substrat (40).

18. Procédé selon la revendication 17, **caractérisé en ce que** l'étape b2) est effectuée après les étapes c) et d) et avant l'étape e) dans le format de feuille.
